# NOUVEAU FASCICULE DE BREVET EUROPEEN

(11) **EP 1 405 260 B2**
(45) Date de publication et mention de la décision concernant l'opposition: **12.12.2012**
(45) Mention de la délivrance du brevet: 17.12.2008
(21) Numéro de dépôt: 02747524.3
(22) Date de dépôt: 10.06.2002
(51) Int. Cl.: G06K 19/077

(54) **CARTE A MICROCIRCUIT AVEC PLAQUETTE DETACHABLE**
CHIPKARTE MIT EINER ABTRENNBAREN PLATTE
MICROCIRCUIT CARD WITH DETACHABLE WAFER

(30) Priorité: 14.06.2001 FR 0107793
(43) Date de publication de la demande: 07.04.2004
(73) Titulaire: Oberthur Technologies, 75017 Paris (FR)
(72) Inventeur: ENOUF, Guy, F-14190 Saint-Sylvain (FR)
(74) Mandataire: Quantin, Bruno Marie Henri
(86) Numéro de dépôt international: PCT/FR2002/001976
(87) Numéro de publication internationale: WO 2002/103626

(56) Documents cités:
- FR-A- 2 783 948
- US-A- 5 362 955

## Description

La présente invention se rapporte à une carte à microcircuit comportant une plaquette détachable, le microcircuit étant placé sur cette plaquette détachable.

Une telle carte peut soit être utilisée telle quelle dans un lecteur destiné à la recevoir ou bien la plaquette peut en être détachée pour être placée dans un appareil. Ce type de carte est particulièrement utilisé dans les téléphones mobiles. Son format est conforme aux normes internationales GSM 11.11 et ISO 78 16.

Dans la suite du document on appellera "côté d'introduction de la carte" le côté d'introduction de la carte dans un lecteur du type précité lorsque celle-ci est utilisée telle quelle, c'est-à-dire lorsque la plaquette détachable n'en est pas détachée.

L'invention concerne plus particulièrement un perfectionnement relatif à la structure des moyens d'attache entre la plaquette détachable et un corps de carte de cette carte.

L'invention vise en particulier à concilier divers impératifs a priori contradictoires, à savoir principalement une facilité de détachement de la plaquette lorsqu'il est nécessaire de la séparer du corps de carte et un bon comportement de la carte vis-à-vis de différents tests de flexions normalisés.

On connaît par les documents FR 2 773 900 et FR 2 783 948 une carte de ce genre comportant des languettes de liaison cassables s'étendant entre le corps de carte et la plaquette détachable. Mis à part les parties cassables, la plaquette détachable apparaît prédécoupée dans le corps de carte par la présence de fente(s) délimitant sensiblement son périmètre. Cependant toutes ces parties cassables sont pourvues de rainures ou entailles permettant d'amorcer la rupture au moment de la séparation entre la plaquette et le corps de carte. Ces entailles sont réalisées par tranchage. Or, le tranchage est une opération délicate à réaliser à l'échelon industriel, la profondeur des entailles pouvant varier en fonction du réglage des outils de tranchage ou au fur et à mesure de l'usure de ceux-ci. Il est donc difficile de concilier les deux impératifs essentiels précités, à savoir un détachement facile de la plaquette du corps de carte, et une résistance suffisante aux efforts de flexion/torsion définis par les normes ISO 78 161-2 et ISO 10 373.

Le document EP-0 638 873 décrit également une carte de ce genre.

L'invention a pour but de supprimer au moins une partie et éventuellement toutes les opérations de tranchage.

Dans ce but, l'invention concerne une carte à microcircuit selon la revendication 1.

On obtient ainsi une languette non tranchée de forme optimisée. En effet, lorsque la languette non tranchée est rompue pour le détachement de la plaquette du corps de carte, la zone de rupture est située en retrait du bord droit de la plaquette. Ceci permet, d'une part, d'éviter toute bavure en saillie pouvant blesser l'utilisateur de cette plaquette et/ou gêner son positionnement dans un appareil.

Selon une caractéristique particulière de la carte à microcircuit selon l'invention, l'attache partant du côté de la plaquette parallèle au côté d'introduction de la carte est une languette tranchée s'étendant sur une partie au moins du côté de la plaquette parallèle au côté d'introduction de la carte.

Selon l'invention, les bords de la languette non tranchée convergent faiblement à partir du corps de carte et de façon accentuée au voisinage de la plaquette. La languette non tranchée a ainsi sensiblement une forme de coupe.

Cela permet de définir précisément la position du pied de rupture à l'intérieur du bord droit de la plaquette.

Selon une caractéristique de la carte à microcircuit selon l'invention, la languette non tranchée traverse une partie de la fente périphérique sensiblement perpendiculaire au côté d'introduction de la carte, ce qui permet une excellente tenue de la languette non tranchée au cours des tests de torsion précités.

Selon une caractéristique préférée de la carte à microcircuit selon l'invention, dans laquelle la carte est sensiblement rectangulaire et comporte une médiane perpendiculaire au côté d'introduction, la plaquette étant située en majeure partie sur une moitié de la carte définie entre la médiane et un bord de la carte, ladite partie de la fente où se trouve la languette non tranchée est située entre la plaquette et ce bord de la carte.

Ainsi, la languette non tranchée est relativement éloignée de cette médiane, cette médiane matérialisant une ligne de pliure de la carte lors de flexions en "petits côtés", ces flexions étant définies par les normes ISO précitées.

Selon une autre caractéristique préférée de la carte à microcircuit selon l'invention, la languette non tranchée est située à proximité du microcircuit en arrière de ce dernier par rapport à l'attache.

Ainsi, la languette non tranchée reste à distance d'une deuxième médiane de la carte parallèle à son côté d'introduction, cette deuxième médiane correspondant à la ligne de pliure de la carte lors des tests de flexions en "grands côtés".

Autrement dit, la position de la languette non tranchée selon ces deux dernières caractéristiques, permet d'obtenir une excellente résistance aux tests de flexions en "petits côtés" et en "grands côtés" définis par la norme ISO.

Selon une autre caractéristique particulière de l'invention, la carte comporte une seule languette non tranchée.

Cette caractéristique particulière permet de faciliter le détachement de la plaquette du corps de carte.

En effet, une fois l'attache rompue, il suffit de faire pivoter la plaquette autour de cette unique languette non tranchée pour la détacher complètement du corps de carte.

L'invention sera mieux comprise, et d'autres avantages de celle-ci apparaîtront plus clairement, à la lumière de la description qui va suivre cette description étant donnée uniquement à titre d'exemple et faite en référence aux dessins annexés dans lesquels :
- la figure 1 est une vue en plan d'une carte à microcircuit conforme à l'invention ;
- la figure 2 est une coupe partielle II-II de la figure 1 ; et
- la figure 3 est une vue de détail à plus grande échelle de l'encadré III de la figure 1 montrant plus particulièrement la languette non tranchée.

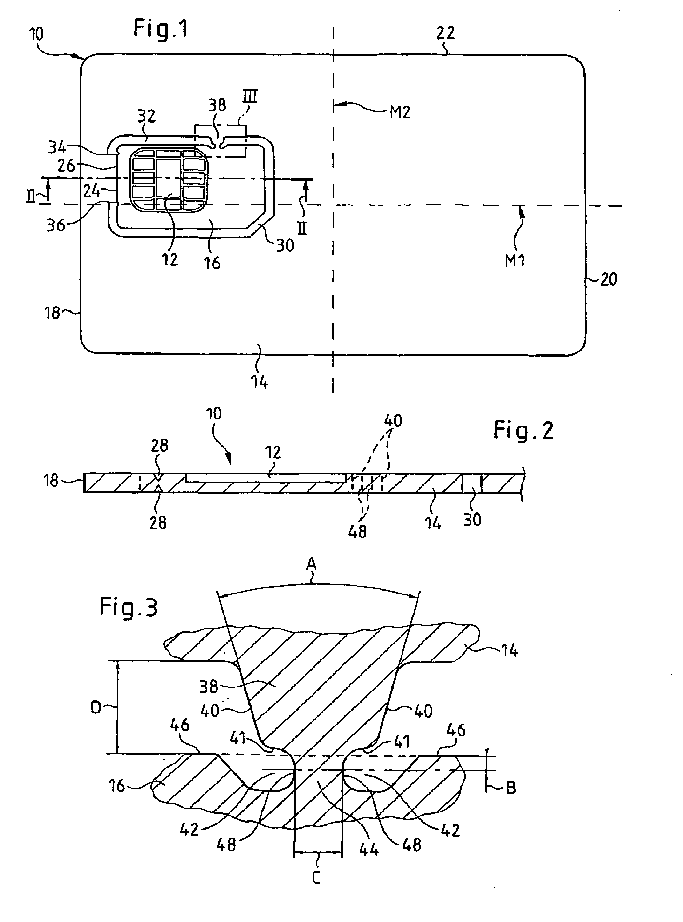

La **figure 1** représente une vue en plan d'une carte 10 à microcircuit 12 conforme à l'invention.

La carte à microcircuit comporte un corps de carte 14 et une plaquette détachable 16 comportant le microcircuit 12.

Cette carte 10 peut être utilisée telle quelle lorsqu'elle est insérée dans un lecteur destiné à la recevoir. Dans un tel mode de fonctionnement la carte 10 à microcircuit est introduite dans ce lecteur par un côté 18 appelé "côté d'introduction de la carte".

Ce côté 18 d'introduction de la carte est un petit côté de la carte.

La carte 10 à microcircuit est sensiblement rectangulaire. Elle comporte une première médiane M1 perpendiculaire aux petits côtés 18, 20 de la carte et une deuxième médiane M2 parallèle à ces petits côtés.

La position de la plaquette détachable 16 dans la carte 10 est normalisée. La plaquette 16 est située en majeure partie sur une moitié de la carte 10 définie par la première médiane M1 et un bord 22 de la carte 10.

La plaquette 16 est reliée au corps de carte 14 par une attache 24 partant d'un côté 26 de la plaquette 16 parallèle au côté 18 d'introduction de la carte 10.

Dans le mode de réalisation représenté sur les figures, cette attache 24 est une languette pré-tranchée s'étendant sur une partie du côté 26 de la plaquette 16 parallèle au côté 18 d'introduction de la carte 10.

En première variante, cette languette tranchée 24 pourrait s'étendre sur tous le côté 26 de la plaquette 16.

Dans une autre variante, cette attache 24 pourrait être constituée par une ou plusieurs languettes, tranchées ou non.

Ces deux variantes ne sont pas représentées dans le mode de réalisation décrit ici, et comme représenté à la figure 2, la languette tranchée comporte une double incision 28 de prédécoupage, non traversante, ici à profil en V, cette double incision 28 de prédécoupage étant réalisée sur chacune des faces de la carte 10 et en regard l'une de l'autre.

Bien entendu, en variante, une incision 28 de prédécoupage pourrait n'être réalisée que sur une face de la carte 10.

La plaquette 16 est séparée de la carte 10 par une fente périphérique 30 dont une partie 32 au moins est sensiblement perpendiculaire au côté 18 d'introduction de la carte 10.

Dans le mode préféré de réalisation représenté à la figure 1, la partie 32 de la fente périphérique 30 est située entre la plaquette 16 et le bord 22 de la carte 10.

Plus précisement, la fente périphérique 30 part d'une première extrémité 34 de l'attache 24, délimite une partie du périmètre de la plaquette 16, et se termine au niveau de la deuxième extrémité 36 de l'attache 24.

Dans le mode de réalisation représenté à la figure 3, la largeur D de la fente périphérique 30 est 1,5 mm.

La carte 10 à microcircuit 12 comporte au moins une languette non tranchée 38.

Cette languette non tranchée 38 relie la plaquette 16 au corps de carte 14, en traversant la partie 32 de la fente périphérique 30.

Dans le mode de réalisation préféré représenté à la figure 1, cette languette non tranchée 38 est unique.

Bien entendu, en variante, la carte à microcircuit pourrait comporter plusieurs languettes non tranchées.

Dans le mode de réalisation préféré représenté à la figure 1, la languette non tranchée 38 est située à proximité du microcircuit 12 et en arrière de ce dernier par rapport à l'attache 24.

Nous allons décrire maintenant plus en détail en référence à la figure 3, la forme de la languette non tranchée 38.

Dans le mode de réalisation selon l'invention, la languette non tranchée 38 comporte deux bords 40 convergeant faiblement l'un vers l'autre à partir du corps de carte 14, et de façon plus accentuée au voisinage 41 de la plaquette 16.

A titre d'exemple, les deux bords 40 forment, à partir du corps de carte 14, un angle A de 30 degrés.

La plaquette 16 comporte deux évidements 42 de part et d'autre de sa jonction avec la languette non tranchée 38 délimitant un pied de rupture 44 de la languette non tranchée 38 à l'intérieur d'un bord droit 46 de la plaquette 16.

Dans le mode de réalisation représenté à la figure 3 :
- la largeur maximale C du pied de rupture 44 est 0,75 mm ;
- la distance B définie entre le bord droit 46 de la plaquette 16 et la partie la plus étroite du pied de rupture 44 est 0,25 mm.

Les bords 40 de la languette non tranchée 38, se prolongent par le contour des évidements 42.

Dans un mode préféré de réalisation décrit ici, les évidements 42 comportent chacun un contour dont une portion courbe 48 délimite un côté du pied de rupture.

Cette portion courbe 48 se prolonge à rejoindre le bord droit 46 de la plaquette 16.

Ainsi, la languette non tranchée 38 est sensiblement en forme de coupe.

Dans un autre mode de réalisation non représenté, les bords 40 de la languette non tranchée 38 pourraient ne converger qu'à partir du voisinage de la plaquette 16.

Quoi qu'il en soit, il est important, que le pied de rupture 44 défini par le rétrécissement de la languette 38 soit en retrait du bord droit 46 de la plaquette.

## Revendications

1. Carte (10) à microcircuit (12) comportant un corps de carte (14) et une plaquette détachable (16) comportant ledit microcircuit (12), ladite plaquette (16) étant reliée audit corps de carte (14) par une attache (24) partant d'un côté (26) de la plaquette (16) parallèle à un côté (18) d'introduction de ladite carte (10), ladite plaquette (16) étant séparée dudit corps de carte (14) par une fente périphérique (30), ladite carte comportant au moins une languette non tranchée (38) reliant ladite plaquette (16) audit corps de carte (14) à travers ladite fente périphérique (30), ladite languette non tranchée (38) comportant deux bords (40) convergeant l'un vers l'autre de façon accentuée au voisinage (41) de la plaquette (16), ladite plaquette (16) comportant deux évidements (42) de part et d'autre de sa jonction avec ladite languette non tranchée (38), délimitant un pied de rupture (44) de ladite languette non tranchée (38), **caractérisée en ce que** la partie la plus étroite dudit pied de rupture se situe à l'intérieur d'un bord droit (46) de ladite plaquette (16), et **en ce que** les lesdits bords (40) de la languette non tranchée (38) convergent faiblement à partir dudit corps de carte (14), et de façon accentuée au voisinage de la dite plaquette (16), cette languette non tranchée étant sensiblement en forme de coupe.

2. Carte à microcircuit selon la revendication 1, **caractérisée en ce que** ladite attache (24) est une languette tranchée s'étendant sur une partie au moins dudit côté (26) de la plaquette (16) parallèle audit côté (18) d'introduction de la carte.

3. Carte à microcircuit selon la revendication 1 ou la revendication 2, **caractérisée en ce que** lesdits évidements (42) comportent chacun un contour dont une portion courbe (48) délimite un côté dudit pied de rupture (44), cette portion courbe (48) se prolongeant à rejoindre ledit bord droit (46) de la plaquette (16).

4. Carte à microcircuit selon l'une quelconque des revendication 1 à 3 **caractérisée en ce que** ladite languette non tranchée (38) traverse une partie (32) de ladite fente périphérique (30), ladite partie (32) étant sensiblement perpendiculaire audit côté (18) d'introduction.

5. Carte à microcircuit selon l'une quelconque des revendications 1 à 4, **caractérisée en ce qu'**elle comporte une seule languette non tranchée (38).

6. Carte à microcircuit selon la revendication 4 ou 5, la carte (10) étant sensiblement rectangulaire et comportant une médiane (M1) perpendiculaire audit côté (18) d'introduction, la plaquette (16) étant située en majeure partie sur une moitié de la carte (10) définie entre ladite médiane (M1) et un bord (22) de ladite carte (10), **caractérisée en ce que** ladite partie (32) de la fente (30) où se trouve ladite languette non tranchée (38) est située entre ladite plaquette (16) et ce bord (22) de la carte (10).

7. Carte à microcircuit selon l'une quelconque des revendications 1 à 6, **caractérisée en ce que** ladite longuette non tranchée (38) est située à proximité du microcircuit (12), en arrière de ce dernier par rapport à ladite attache (24).

## Claims

1. Card (10) incorporating a microcircuit (12) and having a card body (14) and a detachable wafer (16) incorporating said microcircuit (12), said wafer (16) being connected to said card body (14) by an attachment (24) extending from one side (26) of the wafer (16) parallel to an insertion side (18) of said card (10), said wafer (16) being separated from said card body (14) by a peripheral slot (30), said card including at least one unscored tongue (38) connecting said wafer (16) to said card body (14) across said peripheral slot (30), said unscored tongue (38) having two edges (40) converging in an accentuated fashion in the vicinity (41) of the wafer (16), said wafer (16) including two recesses (42) on respective opposite sides of its junction with said unscored tongue (38), delimiting a point (44) of said unscored tongue (38) at which the break is initiated, **characterised in that** the narrowest part of said point is situated inside a straight edge (46) of said wafer (16), and **in that** said edges (40) of the unscored tongue (38) converge slightly from said card body (14) and more sharply in the vicinity of said wafer (16), said unscored tongue being substantially cup shaped.

2. Microcircuit card according to claim 1, **characterised in that** said attachment (24) is a scored tongue extending over at least a portion of said side (26) of the wafer (16) parallel to said insertion side (18) of the card.

3. Microcircuit card according to claim 1 or claim 2, **characterised in that** each recess (42) has a contour with a curved portion (48) delimiting one side of said point (44), said curved portion (48) being extended to join said straight edge (46) of the wafer (16).

4. Microcircuit card according to any one of claims 1 to 3, **characterised in that** said unscored tongue (38) crosses a portion (32) of said peripheral slot (30), said portion (32) being substantially perpendicular to said insertion side (18).

5. Microcircuit card according to any one of claims 1 to 4, **characterised in that** it includes only one unscored tongue (38).

6. Microcircuit card according to claim 4 or claim 5, the card (10) being substantially rectangular and having a midline (M1) perpendicular to said insertion side (18), the wafer (16) being situated for the most part in a half of the card (10) defined between said midline (M1) and an edge (22) of said card (10), **characterised in that** said portion (32) of the slot (30) in which said unscored tongue (38) is situated is located between said wafer (16) and this edge (22) of the card (10).

7. Microcircuit card according to any one of claims 1 to 6, **characterised in that** said unscored tongue (38) is near the microcircuit (12) and to the rear thereof relative to said attachment (24).

## Patentansprüche

1. Karte (10) mit Mikrochip bzw. Mikroschaltung bzw. die integrierte Schaltung (12), umfassend einen Kartenkörper (14) und eine lösbare bzw. entfernbare Platte (16), welche den Mikrochip (12) umfaßt, wobei die Platte (16) mit dem Kartenkörper (14) über eine Verbindung bzw. Festlegung bzw. ein Verbindungsstück (24) verbunden ist, welche von einem Rand bzw. einer Kante (26) der Platte (16) parallel zu einer Einführseite (18) der Karte (10) verläuft, wobei die Platte (16) von dem Kartenkörper (14) durch ein Umfangsfenster bzw. einen umfänglichen Spalt (30) getrennt ist, wobei die Karte wenigstens eine nicht durchtrennte Zunge (38) umfaßt, welche die Platte (16) mit dem Kartenkörper (14) über das Umfangsfenster (30) verbindet, wobei die nicht durchtrennte Zunge (38) zwei Ränder bzw. Kanten (40) umfaßt, welche eine zur anderen in betonter bzw. angehobener Weise in der Nachbarschaft (41) der Platte (16) konvergieren, wobei die Platte (16) zwei Ausnehmungen bzw. Vertiefungen (42) zu beiden Seiten ihrer Verbindung mit der nicht durchtrennten Zunge (38) umfaßt, welche einen Bruch- bzw. Reißfuß bzw. eine Sollbruchstelle (44) der nicht durchtrennten Zunge (38) begrenzen, **dadurch gekennzeichnet, daß** sich der schmalste Teil des Bruch- bzw. Reißfluß bzw. der Sollbruchstelle im Inneren eines geraden Rands (46) der Platte (16) befindet, und dadurch, daß die Ränder bzw. Kanten (40) der nicht durchtrennten Zunge (38) geringfügig ausgehend von dem Kartenkörper (14) und in betonter bzw. angehobener Weise in der Nachbarschaft der Platte (16) konvergieren, wobei die nicht durchtrennte Zunge im wesentlichen die Form einer Schale bzw. eines Bechers aufweist.

2. Karte mit Mikrochip nach Anspruch 1, **dadurch gekennzeichnet, daß** die Festlegung (24) eine durchtrennte Zunge ist, welche sich über einen Bereich wenigstens an der Seite (26) der Platte (16) parallel zur Einführseite (18) der Karte erstreckt.

3. Karte mit Mikrochip nach Anspruch 1 oder 2, **dadurch gekennzeichnet, daß** die Vertiefungen (42) jeweils eine Kontur umfassen, von welcher ein gekrümmter bzw. gebogener Abschnitt (48) eine Seite des Bruchfußes (44) begrenzt, wobei sich dieser gekrümmte Abschnitt (48) fortsetzt, um an den geraden Rand (46) der Platte (16) anzuschließen.

4. Karte mit Mikrochip nach einem der Ansprüche 1 bis 3, **dadurch gekennzeichnet, daß** die nicht durchtrennte Zunge (38) einen Bereich (32) des Umfangsfensters (30) durchquert, wobei der Bereich (32) im wesentlichen normal bzw. senkrecht auf die Einführseite (18) ist.

5. Karte mit Mikrochip nach einem der Ansprüche 1 bis 4, **dadurch gekennzeichnet, daß** sie eine einzige, nicht durchtrennte Zunge (38) umfaßt.

6. Karte mit Mikrochip nach Anspruch 4 oder 5, wobei die Karte (10) im wesentlichen rechteckig bzw. rechtwinkelig ist und eine Mittellinie (M1) normal bzw. senkrecht auf die Einführseite (18) umfaßt, wobei die Platte (16) in ihrem Hauptbereich bzw. -teil auf einer Hälfte der Karte (10) angeordnet ist, welche zwischen der Mittellinie (M1) und einem Rand (22) der Karte (10) definiert ist, **dadurch gekennzeichnet, daß** der Bereich (32) des Fensters (30), wo sich die nicht durchtrennte Zunge (38) befindet, zwischen der Platte (16) und dem Rand (22) der Karte (10) angeordnet ist.

7. Karte mit Mikrochip nach einem der Ansprüche 1 bis 6, **dadurch gekennzeichnet, daß** die nicht durchtrennte Zunge (38) in der Nähe des Chips bzw. der integrierten Schaltung (12) hinter dem bzw. der letzteren in bezug auf die Verbindung (24) angeordnet ist.
